# EUROPÄISCHE PATENTSCHRIFT

(11) **EP 2 274 535 B1**
(45) Veröffentlichungstag und Bekanntmachung des Hinweises auf die Patenterteilung: **24.02.2016**
(21) Anmeldenummer: 09745364.1
(22) Anmeldetag: 08.05.2009
(51) Int. Cl.: F16G 11/12

(54) **VORRICHTUNG ZUR STOSSDÄMPFUNG VON SEILKONSTRUKTIONEN, INSBESONDERE FÜR STEINSCHLAG-, MURGANG- UND SCHNEEVERBAUUNGEN**
DEVICE FOR THE IMPACT DAMPING OF CABLE CONSTRUCTIONS, IN PARTICULAR FOR BARRIER STRUCTURES FOR FALLING ROCK, MUD FLOWS AND SNOW
DISPOSITIF POUR L AMORTISSEMENT DES CHOCS DE CONSTRUCTIONS EN CORDAGE, EN PARTICULIER POUR DES CONSTRUCTIONS DE PROTECTION CONTRE LES CHUTES DE PIERRES, LES COULÉES DE BOUE ET LA NEIGE

(30) Priorität: 16.05.2008 CH 746082008
(43) Veröffentlichungstag der Anmeldung: 19.01.2011
(73) Patentinhaber: Geobrugg AG, 8590 Romanshorn (CH)
(72) Erfinder: VON ALLMEN, Hans Peter, CH-1712 Tafers (CH); ROTH, Andrea, CH-9322 Egnau (CH)
(74) Vertreter: Luchs, Willi
(86) Internationale Anmeldenummer: PCT/CH2009/000151
(87) Internationale Veröffentlichungsnummer: WO 2009/137951

(56) Entgegenhaltungen:
- DE-A1-102005 053 710
- FR-A- 2 673 253
- US-A- 3 087 584
- US-A- 4 730 810

## Beschreibung

Die Erfindung betrifft eine Vorrichtung zur Überlast-Stossdämpfung von Seilkonstruktionen, insbesondere für Steinschlag-, Murgang- und Schneeverbauungen, gemäss dem Oberbegriff des Anspruches 1.

Eine Vorrichtung dieser Art ist in CH-PS 659 299 offenbart. Sie umfasst ein im Seilstrang eingebautes, durch Zugkräfte deformierbares Zwischenstück, das zu einem Ring gebogen ist und bei Belastung gestreckt wird. Der Stoss-Dämpfungsverlauf dieser Vorrichtung zeigt Streuungen, welche bei sehr präzisen Anwendungen nicht toleriert werden können.

In der Druckschrift US-A-4,730,810 sind Schock-Absorbiermittel an einem Schutznetz vorgesehen, bei welchen jeweils ein Seil via mehrere zwischen zwei Platten befestigte, nicht drehbare runde Scheiben umgelenkt ist, wobei dieses Seil auf der einen Seite mit Tragseilen verbunden und auf der andern Seite lose gehalten ist. Das Schock-Absorbiermittel seinerseits ist via einen Bügel an einer Verankerung gehalten. Durch die Umlenkung und die Verspannung des Seils wird eine zwischen diesem und den Scheiben entstehende Reibung erzielt, wodurch das Seil im unbelasteten Zustand des Netzes gespannt bleibt. Wenn nun eine Belastung des Netzes durch einen Impact eines Steines oder ähnlichem erfolgt, so entsteht via die Tragseile ein Zug auf dieses Seil und es gibt nach, aber wegen der Reibung zwischen diesem und den Scheiben wird von diesem ein nachgebender Widerstand erzeugt und bewirkt so die gewünschte Bremswirkung.

In US-A-3,087,584 ist eine Vorrichtung mit einer Belastungsbegrenzung bei einem Aufprall beispielsweise für einen Pilotensitz in einem Flugzeug geoffenbart, bei dem beim Pilotensitz bei einer abrupten harten Landung mit Hilfe dieser Vorrichtung eine Relativbewegung zu dem fest fixierten Sockel erfolgen kann. Diese Vorrichtung besteht aus einem U-förmigen Teil und darin hintereinander angeordneten Rollen, die jeweils auf Kugellagern drehbar gelagert sind. Ein Draht oder Rundstab ist auf der Seite mit den freien Enden durch den Teil zur hintersten Rolle, um diese herum und zurück um weitere Rollen gebogen und bildet dann als Abschluss eine Schlaufe. Die Konstruktion dieser Vorrichtung ist relativ kompliziert und auch voluminös, da bei dieser mehrere Rollen vorgesehen sind und die einzelnen Rollen auf Kugellagern gelagert sind.

Der vorliegenden Erfindung liegt die Aufgabe zugrunde, eine Vorrichtung der eingangs genannten Art zu schaffen, mit welcher der Stoss-Dämpfungsverlauf besser definiert bzw. optimiert werden kann und über dies repetierbarer ist.

Diese Aufgabe wird erfindungsgemäss durch eine Vorrichtung mit den Merkmalen des Anspruches 1 gelöst.

Weitere bevorzugte Ausgestaltungen der erfindungsgemässen Vorrichtung bilden den Gegenstand der abhängigen Ansprüche.

Erfindungsgemäss wird in ein auf Zug beanspruchtes Seil ein Zwischenstück eingebaut, das ein oder mehrere Längselemente aufweist, welche als Bänder, Stäbe, Drähte oder Litzen und/oder Kombinationen davon ausgebildet sind, deren eines Ende in Verbindung mit einem Seilende steht und die um ein mit dem anderen Seilende verbundenen Umlenkelement geführt sind. Das andere Ende der Bänder, Stäbe, Drähte oder Litzen ist frei, und der Umlenkwinkel vorteilhaft zwischen 90 und 225° beträgt. Es sind Mittel vorgesehen, durch welche der Umlenkwinkel bei der Belastung des Zwischenstückes im wesentlichen aufrechterhalten bleibt.

Bei erhöhter Zugbelastung werden die Längselemente über das Umlenkelement (mit einem einzigen Umlenkbolzen) gezogen, wobei durch ihre Deformation und die Reibung die auf das Seil beispielsweise durch herabstürzende Gesteins- oder Schneemassen einwirkende Stossbelastung gedämpft und die aufzunehmende kinetische Energie absorbiert wird. Dabei kann der Stoss-Dämpfungsverlauf beispielsweise durch Variierung der Anzahl, der Dicke oder der Breite der Bänder, der Formgebung dieser Längselemente, der Werkstoffeigenschaften (z.B. Festigkeit, Fliessgrenze, Elastizitätsmodul) oder durch Variierung der Anzahl oder der Dicke der Stäbe, Drähte oder Litzen über die Länge in gewünschter Weise beeinflusst werden.

Es sind aber auch entsprechende Vorrichtungen möglich, wo durch mehrere analoge Umlenkungsprozesse die Längselemente mehrfach umgelenkt werden, womit der Energie-Absorbtionsprozess verstärkt werden kann.

Die Erfindung wird nachfolgend anhand der Zeichnung näher erläutert. Es zeigen:
- Fig. 1: ein erstes Ausführungsbeispiel einer erfindungsgemässen Vorrichtung zur Überlast-Stossdämpfung für ein auf Zug beanspruchtes Seil in Seitenansicht;
- Fig. 2: die Vorrichtung nach Fig. 1 in Draufsicht;
- Fig. 3: ein zweites Ausführungsbeispiel einer erfindungsgemässen Vorrichtung zur Überlast-Stossdämpfung für ein auf Zug beanspruchtes Seil in Seitenansicht; und
- Fig. 4: die Vorrichtung nach Fig. 3 in Draufsicht.

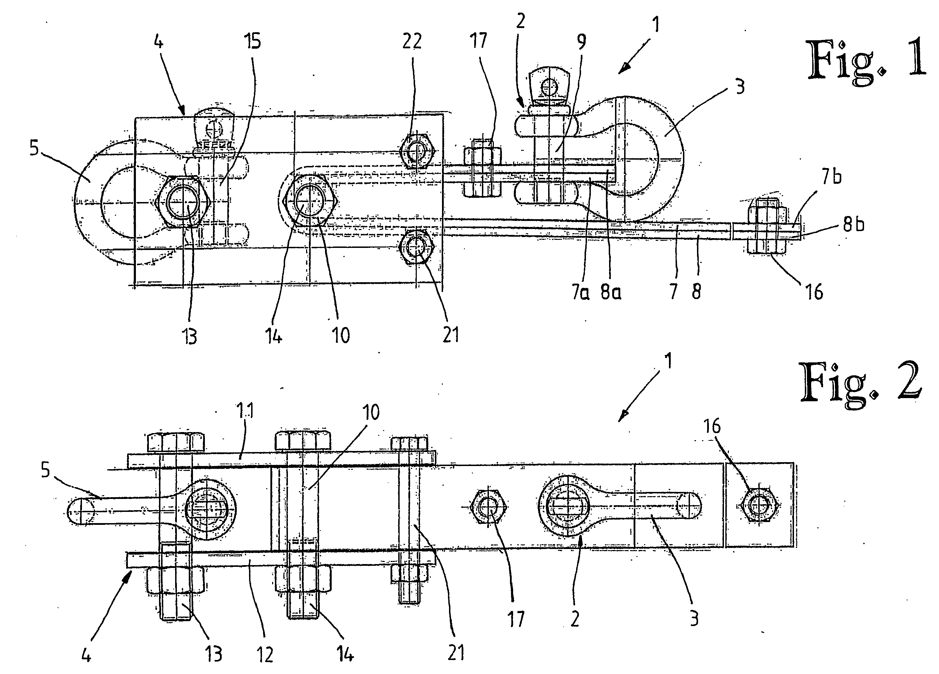

In Fig.1 und 2 ist ein Zwischenstück 1 für eine Vorrichtung zur Überlast-Stossdämpfung von Seilkonstruktionen, insbesondere Naturgefahren wie beispielsweise für Steinschlag-, Murgang- und Schneeverbauungen, dargestellt, welches in ein auf Zug beanspruchtes Seil eingebaut wird, um bei erhöhter Zugbelastung, beispielsweise durch herabstürzende Gesteins- oder Schneemassen, die auf das Seil einwirkende Stossbelastung zu dämpfen und kinetische Energie abzubauen, wobei die Seilfestigkeit voll ausgenutzt werden kann. Seilkonstruktionen, insbesondere für Steinschlag-, Murgang- und Schneeverbauungen, gemäss dem Oberbegriff des Anspruches 1. Weitere Anwendungsbereiche sind möglich für Systeme und Vorrichtungen, wo durch dynamische Bremsvorgänge kinetische Energien von Massen absorbiert werden sollen.

Das Zwischenstück 1 weist ein erstes Anschlussstück 2 mit einem Schäkel 3 auf, an welchem das aus der Zeichnung nicht ersichtliche Seil mit einem Zug-, Befestigungselement oder Seilende befestigt wird. Das andere Zug-, Befestigungselement oder Seilende wird mit einem Schäkel 5 eines zweiten Anschlussstückes 4 verbunden. Anstelle von Schäkel können auch andere Anschlussstücke als Verbindungselemente verwendet werden.

Bei dem in Fig. 1 und 2 dargestellten Ausführungsbeispiel umfasst das Zwischenstück 1 erfindungsgemäss zwei übereinander gelegte Bänder bzw. Flacheisen 7, 8 als Längselemente, die mit einem Ende 7a, 8a mittels eines den Schäkel 3 verschliessenden Schraubbolzens 9 im ersten Anschlussstück 2 befestigt sind. Das zweite Anschlussstück 4 umfasst zwei Platten 11, 12, die mittels Schrauben 13, 14 miteinander verbunden und in einem der Bandbreite entsprechenden Abstand gehalten werden. Während die eine Schraube 13 dem Schäkel 5 und seinem Schraubbolzen 15 zugeordnet ist, bildet die andere Schraube 14 einen Umlenkbolzen 10, um welchen die Bänder 7, 8 geführt sind. Anstelle der Schraubverbindungen sind auch entsprechende geschweisste Verbindungen möglich. Der Umlenkwinkel beträgt vorzugsweise zumindest annähernd 180°.

Die mit dem einem Ende 7a, 8a im ersten Anschlussstück 2 befestigten Bänder 7, 8 sind am anderen Ende 7b, 8b frei. In diesem Endbereich sind die Bänder 7, 8 mittels einer Schraube 16 miteinander verbunden, wobei auch im Anfangsbereich, beim ersten Anschlussstück 2, eine Schraube 17 die Bänder 7, 8 verbindet.

Das zweite Anschlussstück 4 ist ferner mit zwei zum Umlenkbolzen 10 parallelen Führungsbolzen 21, 22 für die umgelenkten Bänder 7, 8 versehen, die gegenüber dem Umlenkbolzen 10 in Richtung zum freien Ende 7b, 8b bzw. zum ersten Anschlussstück 2 hin versetzt angeordnet sind, auf dem Aussenband 8 aufliegen, und die für die Aufrechterhaltung des Umlenkwinkels bei der Belastung des Zwischenstückes 1 sorgen. Insbesondere der die freien Enden 7b, 8b, in ihrer Lage sichernde Führungsbolzen 21 ist von Bedeutung, das Vorhandensein zweier Führungsbolzen 21, 22 jedoch von Vorteil.

Die Bänder 7, 8 bestehen vorzugsweise aus einem rohen Stahl, einem wetterfesten Stahl (Corten), einem verzinkten Stahl oder einem rostfreien Stahl, sie könnten jedoch auch aus einem Nicht-Eisen-Metall, vorzugsweise Zink, Kupfer oder deren Legierungen, sein.

Der Korrosionsschutz kann aber auch durch entsprechende Beschichtungen (z.B. Duplex-Beschichtung oder Pulverbeschichtungen) oder anderen Oberflächenbehandlungen erreicht werden.

Oberflächenbehandlungen können ausserdem als Prägung, Aufrauen, Schmieren, etc. der Längselemente und/oder der Umlenkbolzen vorgenommen werden, welche die Haft- und Gleitreibungsprozesse in der Vorrichtung entscheidend verändern, wodurch das Bremsverhalten auf bestimmte Charakteristiken angepasst werden kann.

Ebenfalls sind Ausführungen aus nicht-metallischen Werkstoffen möglich, wie beispielsweise die Verwendung von speziellen Kunststoffen, welche bei Verformung Energie absorbieren oder Kombinationen solcher Werkstoffe.

Bei erhöhter Zugbelastung werden die mit dem einen Seilende über den Schäkel 3 in Verbindung stehenden Bänder 7, 8 über den Umlenkbolzen 10 gezogen. Durch die Deformation der Bänder 7, 8 und die Reibung wird die auf das Seil einwirkende Stossbelastung gedämpft und die z.B. beim Steinaufprall aufzunehmende kinetische Energie absorbiert.

Es wäre durchaus möglich, nur ein einziges Längselement einzusetzen. Durch Verwendung von zwei oder mehreren übereinander liegenden Längselementen kann die Wirkung jedoch erheblich verstärkt werden.

Mit dem erfindungsgemässen mindestens ein Band umfassenden Zwischenstück 1 kann der Stoss-Dämpfungsverlauf optimiert werden, beispielsweise durch Variierung der Anzahl, der Dicke oder der Breite der Bänder über die Länge.

Es kann beispielsweise für schonendes Anlaufen des Dämpfungsprozesses gesorgt werden, indem eine über eine bestimmte Bandlänge in Richtung zum freien Ende hin kontinuierlich zunehmende Banddicke und/oder Bandbreite gewählt wird.

Zum gleichen Zweck können auch der Band oder die Bänder mit einem Anfangsbiegedurchmesser vorgebogen werden, der grösser ist als der Durchmesser des Umlenkbolzens 10.

Es wäre auch möglich, die Festigkeit des Bandes oder der Bänder im Anfangsbereich durch thermische Vorbehandlung herabzusetzen.

Anstelle von einem Band oder mehreren Bändern können auch einzelne oder mehrere nebeneinander angeordnete Längselemente als Deformationselemente verwendet werden (die Materialien könnten gleich sein wie die bereits erwähnten Bändermaterialien).

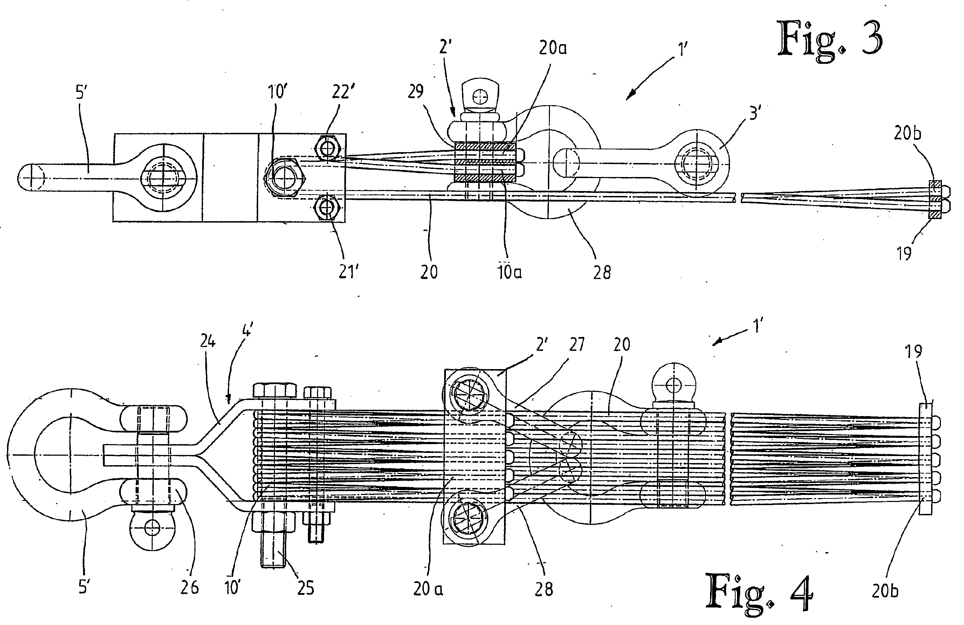

In Fig. 3 und 4 ist ein weiteres Ausführungsbeispiel eines Zwischenstückes 1' gezeigt, welches wiederum für den Einbau in ein Seil ein erstes Anschlussstück 2', in welchem die als Längselemente vorgesehenen Drähte 20 (oder Stäbe oder Litzen) mit einem Ende 20a befestigt sind, und ein zweites Anschlussstück 4' mit einem Umlenkbolzen 10' aufweist, wobei die Anschlussstücke 2', 4' wiederum mit je einem Schäkel 3', 5' zur Befestigung von Seilenden versehen sind. Die freien Enden 20b der um den Umlenkbolzen 10' wiederum mit einem Umlenkwinkel von ca. 180° geführten Drähte 20 sind in einem Endanschlag 19 zusammengefasst. (Auch bei der Ausführungsform nach Fig. 1 und 2 kann ein Endanschlag vorgesehen oder durch die Schraube 16 gebildet sein).

Der Umlenkbolzen 10' ist durch eine einem gabelförmigen Teil 24 des zweiten Anschlussstückes 4' zugeordneten Schraube 25 gebildet. Der gabelförmige Teil 24 ist wiederum mit vorzugsweise zwei zum Umlenkbolzen 10' parallelen Führungsbolzen 21', 22' versehen, die in ihrer Anordnung gegenüber dem Umlenkbolzen 10' und ihrer Funktion den Führungsbolzen 21, 22 nach Fig. 1 und 2 entsprechen und von aussen auf den parallel verlaufenden Drähten 20 aufliegen. Der gabelförmige Teil 24 wird vom Schraubbolzen 26 des Schäkels 5' gehalten.

Beim ersten Anschlussstück 2' des Zwischenstückes 1' sind zwei zusätzliche Schäkel 27, 28 vorhanden, die den zur Befestigung des einen Seilendes bestimmten Schäkel 3' mit einem die Drahtenden 20a aufnehmenden Teil 29 verbinden.

Auch diese Variante der erfindungsgemässen Vorrichtung zur Überlast-Stossdämpfung von Seilkonstruktionen, insbesondere für Steinschlag-, Murgang- und Schneeverbauungen, kann der Stoss-Dämpfungsverlauf durch Variierung der Anzahl oder der Dicke der Drähte, Stäbe oder Litzen, deren Querschnittsform über die Länge optimiert werden. Ähnlich wie bei einer Verwendung von einem oder mehreren Bändern kann dabei auch ein schonendes Anlaufen des Dämpfungsprözesses bewirkt werden.

Selbstverständlich könnte die konstruktive Ausgestaltung der Anschlussstücke von der dargestellten Ausführung abweichen. Es ist aber ein einziger Umlenkbolzen 10 bzw. 10' für das Umlenkelement vorgesehen. Auch könnten anstelle der Führungsbolzen 21, 22 bzw. 21', 22' andere Mittel zum Aufrechterhalten des Umlenkwinkels bei Belastung des Zwischenstückes verwendet werden. Es wäre auch denkbar, dass man die Längselemente um mehr als zwei Umlenkelemente umlenkt, womit das oder die Längselemente mehrfach verbogen würden und damit eine höhere Energieabsorbtion ermöglicht wäre.

Diese Umlenkelemente könnten auch als Lager oder drehbar ausgeführt sein, wodurch die Haft- und/oder Gleitreibungsprozesse in der Vorrichtung ebenfalls entscheidend verändert und das Bremsverhalten auf bestimmte Charakteristiken angepasst werden könnten. Bei einem drehbaren Umlenkelement kann eine gewollte Reduktion der Oberflächenreibung erreicht werden. Ebenso kann diese Eigenschaft durch spezielle Ausgestaltung der Oberflächen der Längselemente sowie der Umlenkelemente beeinflusst werden. Hierzu eignen sich beispielsweise schmierende oder die Gleitreibung reduzierende Beschichtungen der entsprechenden Oberflächen.

Anstelle von Schraubverbindungen zwischen den Zwischenstücken und den Seilenden sind auch alternative Verbindungen möglich, wie beispielsweise eine Schweisskonstruktion oder ein gegenseitiges Verpressen._

Eine Optimierung des Dämpfungsverlaufs kann auch über die Werkstoffeigenschaften, z.B. Festigkeit, Fliessgrenze, Elastizitätsmodul oder dergleichen erfolgen.

## Patentansprüche

1. Vorrichtung zur Stossdämpfung von Seilkonstruktionen, insbesondere für Steinschlag-, Murgang- und Schneeverbauungen, mit mindestens einem durch Zugkräfte umlenkbaren Zwischenstück (1; 1'), welches in einem auf Zug beanspruchten Seil aufgenommen ist, wobei das eine Längselement (7, 8, 20) einerseits mit seinem einen Ende (7a, 8a; 20a) in Verbindung mit dem einen Seilende steht und andererseits um ein mit dem änderten Seilende verbundenen Umlenkelement (10; 10') geführt ist, und dass Mittel vorgesehen sind, durch welche der gebildete Umlenkwinkel des oder der Längselemente bei einer Belastung des Zwischenstückes (1, 1') im wesentlichen aufrechterhalten bleibt, **dadurch gekennzeichnet, dass** das Längselement (7, 8, 20) als mindestens ein Band ausgebildet ist oder dass die Längselemente (20) aus mehreren von nebeneinander verlaufenden Stäben, Drähten und/oder Litzen gebildet sind, und dass das wenigstens eine Längselement (7, 8, 20) mit seinem einen Ende (7a, 8a; 20a) durch einen Schraubbolzen (9) oder mit einem aufnehmenden Teil (29), wie Schweisskonstruktion oder gegenseitiges Verpressen, mit dem Seil verbindbar ist, und wobei das Umlenkelement aus einem einzigen Umlenkbolzen (10; 10') gebildet ist, über welches das wenigstens eine Längselement (7, 8, 20) bei erhöhter Zugbelastung gezogen und durch seine Deformation die aufzunehmende kinetische Energie absorbiert wird.

2. Vorrichtung nach Anspruch 1, **dadurch gekennzeichnet, dass** das eine Ende (7b, 8b; 20b) des oder der Längselemente frei ist und dass der gebildete Umlenkwinkel zwischen 90° und 225° beträgt.

3. Vorrichtung nach Anspruch 1, **dadurch gekennzeichnet, dass** die Längselemente (7, 8; 20) aus Stahl, vorzugsweise einem wetterfesten Stahl (Corten), einem verzinkten Stahl oder einem rostfreien Stahl und/oder aus einem Nicht-Eisen-Metall, vorzugsweise Zink, Kupfer oder deren Legierungen bestehen.

4. Vorrichtung nach einem der Ansprüche 1 bis 3, **dadurch gekennzeichnet, dass** das eine Ende (7a, 8a; 20a) der Längselemente (7, 8; 20) jeweils in einem ersten Anschlussstück (2; 2') befestigt ist, welches mit einem Schäkel (3; 3') zur Verbindung mit dem einen Seilende ausgestattet ist.

5. Vorrichtung nach Anspruch 4, **dadurch gekennzeichnet, dass** das Umlenkelement als ein in einem zweiten Anschlussstück (4; 4') befestigter Umlenkbolzen (10; 10') ausgebildet ist, wobei das zweite Anschlussstück (4; 4') mit einem Schäkel (5; 5') zur Verbindung mit dem anderen Seilende versehen ist.

6. Vorrichtung nach Anspruch 5, **dadurch gekennzeichnet, dass** die Mittel zur Aufrechterhaltung des Umlenkwinkels bei der Belastung des Zwischenstückes (1; 1') durch mindestens einen zum Umlenkbolzen (10; 10') parallelen und von diesem in Richtung zum freien Ende (7b, 8b; 20b) der Längselemente (7, 8; 20) hin beabstandeten Führungsbolzen (21, 22; 22') von aussen auf den um den Umlenkbolzen (10; 10') umgelenkten Längselementen (7, 8; 20) aufliegt/aufliegen.

7. Vorrichtung nach einem der Ansprüche 1 bis 6, **dadurch gekennzeichnet, dass** am freien Ende (7b, 8b; 20b) der Längselemente (7, 8; 20) ein Endanschlag (16; 19) vorgesehen ist.

8. Vorrichtung nach einem der Ansprüche 1 bis 7, **dadurch gekennzeichnet, dass** bei dem mindestens einen Band (7, 8) umfassenden Zwischenstück (1) die Banddicke und/oder die Bandbreite über eine bestimmte Bandlänge in Richtung zum freien Ende (7b, 8b) hin kontinuierlich zunimmt.

9. Vorrichtung nach einem der Ansprüche 1 bis 8, **dadurch gekennzeichnet, dass** das Zwischenstück (1) mindestens zwei übereinander gelegte und um das Umlenkelement (10) geführte Bänder (7, 8) aufweist.

10. Vorrichtung nach einem der Ansprüche 1 bis 7, **dadurch gekennzeichnet, dass** das Zwischenstück (1') eine Anzahl von nebeneinander verlaufenden und um das Umlenkelement (10') geführten Längselemente (20) umfasst.

11. Vorrichtung nach Anspruch 9 oder 10, **dadurch gekennzeichnet, dass** der Stoss-Dämpfungsverlauf durch Variierung der Anzahl, Form oder der Dicke der Längselemente, namentlich der Bänder bzw. der Stäbe, Drähte, oder Litzen oder Kombinationen davon, über die Länge beeinflussbar ist.

## Claims

1. Apparatus for the shock absorption of rope structures, in particular for rockfall, land slide and snow barriers, having at least one intermediate piece (1; 1') deformable by tensile forces, which is accommodated in a rope subjected to tension, wherein the one length element (7, 8, 20) on the one hand is connected to the one rope end with its one end (7a, 8a; 20a) and on the other hand is guided around a deflector element (10; 10') which is connected to the other end of the rope, and that means are provided by means of which the deflection angle of the longitudinal element or elements formed upon loading the intermediate piece (1, 1') is substantially sustained, **characterized in that**
the longitudinal element (7, 8, 20) is formed as at least one band or that the longitudinal elements (20) be in the form of multiple bars, wires and/or strands adjoining each to the other, and that the at least one longitudinal element (7, 8, 20) with its one end (7a, 8a; 20a) being connectable with the rope by a screw bolt (9) or with a receiving part (29), like welded construction or mutual compression, and wherein the deflection element is formed by a single deflecting bolt (10; 10'), over which the at least one longitudinal element (7, 8, 20) drawn at elevated tensile stress and with its deformation the receivable kinetic energy will be absorbed.

2. Apparatus according to Claim 1, **characterised in that** the one end (7b, 8b; 20b) of the longitudinal element or elements is free and that the deflection angle formed is between 90° and 225°.

3. Apparatus according to Claim 1, **characterised in that** the longitudinal elements (7, 8; 20) are made of steel, preferably a weather-proof steel (Corten), a galvanised steel or a stainless steel and/or of a non-ferrous metal, preferably zinc, copper or alloys of the latter.

4. Apparatus according to any of Claims 1 to 3, **characterised in that** the one end (7a, 8a; 20a) of the longitudinal elements (7, 8; 20) is respectively attached within a first connection piece (2; 2'), which is equipped with a shackle (3; 3') for connection to the one rope end.

5. Apparatus according to Claim 4, **characterised in that** the deflection element is in the form of a deflection bolt (10; 10') attached within a second connection piece (4; 4'), whereby the second connection piece (4; 4') being provided with a shackle (5; 5') for connection to the other rope end.

6. Apparatus according to Claim 5, **characterised in that** the means for sustaining the deflection angle upon loading the intermediate piece (1; 1') are formed by at least one guide bolt (21, 22; 22') parallel to the deflection bolt (10; 10') parallel and spaced apart from the latter in the direction of the free end (7b, 8b; 20b) of the longitudinal elements (7, 8; 20), the guide bolt or bolts (21, 22; 21', 22') resting from the outside on the longitudinal elements (7, 8; 20) deflected about the deflection bolt (10; 10').

7. Apparatus according to any of Claims 1 to 6, **characterised in that** an end stop (16; 19) is provided on the free end (7b, 8b; 20b) of the longitudinal elements (7, 8; 20).

8. Apparatus according to any of Claims 1 to 7, **characterised in that** with the intermediate piece (1) comprising at least one strip (7, 8) the strip thickness and/or the strip width increases continuously over a specific strip length towards the free end (7b, 8b).

9. Apparatus according to any of Claims 1 to 8, **characterised in that** the intermediate piece (1) has at least two strips (7, 8) laid over one another and guided about the deflection element (10).

10. Apparatus according to any of Claims 1 to 7, **characterised in that** the intermediate piece (1') comprises a number of longitudinal elements (20) extending next to one another and guided about the deflection element (10').

11. Apparatus according to Claim 9 or 10, **characterised in that** the shock absorption characteristics can be influenced by varying the number, form or the thickness of the longitudinal elements, namely the strips or the bars, wires, ropes or strands or combinations of the latter, over the length.

## Revendications

1. Dispositif pour amortir les chocs subis par des constructions de câbles, notamment pour des structures d'arrêt de chute de pierre, de coulées de boue et de la neige, comprenant au moins une pièce (1; 1') intermédiaire qui peut être renvoyée par des forces de traction et qui est prise dans un câble sollicité à la traction, dans lequel un élément (7, 8; 20) oblong, d'une part, est en liaison par l'une de ses extrémités (7a, 8a; 20a) avec l'une des extrémités d'un câble et guidé, d'autre part, autour d'un élément (10; 10') de renvoi relié à l'autre extrémité du câble et il est prévu des moyens par lesquels l'angle de renvoi formé du ou des éléments oblongs reste sensiblement conservé lorsque la pièce (1; 1') intermédiaire subit une charge, **caractérisé en ce que** l'élément (7, 8; 20) oblong est constitué sous la forme d'au moins une bande ou **en ce que** les éléments (20) oblongs sont formés de plusieurs barres, fils métalliques et/ou torons et **en ce que** le au moins un élément (7, 8; 20) oblong peut, par l'une de ses extrémités (7a, 8a; 20a), par un boulon (9) de boulonnage ou par une partie (29) de réception, comme une construction soudée ou par compression mutuelle, être relié au câble et dans lequel l'élément de renvoi est formé d'un axe (10; 10') de renvoi unique, par lequel le au moins un élément (7, 8; 20) oblong est tiré lorsqu'il est soumis à une charge de traction augmentée et l'énergie cinétique à absorber est absorbée par sa déformation.

2. Dispositif suivant la revendication 1, **caractérisé en ce que** la une extrémité (7b, 8b; 20b) du ou des éléments oblongs est libre et **en ce que** l'angle de renvoi formé est compris entre 90° et 225°.

3. Dispositif suivant la revendication 1, **caractérisé en ce que** les éléments (7, 8; 20) oblongs sont en acier, de préférence en acier résistant aux intempéries (corten), en un acier zingué ou en un acier inoxydable et/ou en un métal non ferreux, de préférence en zinc, en cuivre ou leurs alliages.

4. Dispositif suivant l'une des revendications 1 à 3, **caractérisé en ce que** la une extrémité (7a, 8a; 20a) des éléments (7, 8; 20) oblongs est fixée respectivement dans une première pièce (2; 2') de raccord, qui est équipée d'une manille (3; 3') en liaison avec la une extrémité du câble.

5. Dispositif suivant la revendication 4, **caractérisé en ce que** l'élément de renvoi est constitué sous la forme d'un axe (10; 10') de renvoi fixé à une deuxième pièce (4; 4') de raccord, la deuxième pièce (4; 4') de raccord étant pourvue d'une manille (5; 5') de liaison à l'autre extrémité du câble.

6. Dispositif suivant la revendication 5, **caractérisé en ce que** les moyens de maintien de l'angle de renvoi, lorsque la pièce (1; 1') intermédiaire est soumise à une charge, s'appliquent, par au moins un axe (21, 22; 22') de guidage parallèle à l'axe (10; 10') de renvoi et à distance de celui-ci dans la direction allant vers l'extrémité (7b, 8b; 20b) libre des éléments (7, 8; 20) oblongs, de l'extérieur aux éléments (7, 8; 20) oblongs renvoyés autour de l'axe (10; 10') de renvoi.

7. Dispositif suivant l'une des revendications 1 à 6, **caractérisé en ce qu'**une butée (16; 19) de fin de course est prévue à l'extrémité (7b, 8b; 20b) libre des éléments (7, 8; 20) oblongs.

8. Dispositif suivant l'une des revendications 1 à 7, **caractérisé en ce que**, pour la pièce (1) intermédiaire comprenant au moins une bande (7, 8), l'épaisseur de la bande et/ou la largeur de la bande augmente continuellement en direction de l'extrémité (7b, 8b) libre.

9. Dispositif suivant l'une des revendications 1 à 8, **caractérisé en ce que** la pièce (1) intermédiaire comprend au moins deux bandes (7, 8) superposées et guidées autour de l'élément (10) de-renvoi.

10. Dispositif suivant l'une des revendications 1 à 9, **caractérisé en ce que** la pièce (1') intermédiaire comprend un certain nombre d'éléments (20) oblongs, s'étendant les uns à côté des autres et guidés autour de l'élément (10') de renvoi.

11. Dispositif suivant la revendication 9 ou 10, **caractérisé en ce que** la courbe d'amortissement des chocs peut être influencée par une modification du nombre, de la forme ou de l'épaisseur des éléments oblongs, à savoir des bandes ou des barres, des fils métalliques ou des torons ou de leurs combinaisons, sur la longueur.
